# EUROPEAN PATENT APPLICATION

(11) **EP 4 328 618 A1**
(43) Date of publication of application: **28.02.2024**
(21) Application number: 23191430.0
(22) Date of filing: 15.08.2023
(51) Int. Cl.: G01S 7/02, G01S 13/931

(54) **REAR MOUNTED RADAR FOR AUTONOMOUS VEHICLES**

(30) Priority: 22.08.2022 US 202263373199 P
(71) Applicant: Tusimple, Inc., San Diego, CA 92122 (US)
(72) Inventor: ZHANG, Chiyu, Tucson (US); NING, Juexiao, Tucson (US); ZHENG, Kaixin, San Diego (US); HAN, Xiaoling, San Diego (US)
(74) Representative: Morrall, Jonathan Ian McLachlan

(57) **Abstract**

Methods, systems, apparatus for mitigating adverse effects of road vibrations on radars mounted on a vehicle include an apparatus used for mounting a radar on a rear side of the vehicle. The apparatus includes a base plate, a bracket, one or more fasteners, and one or more washers. The washers may include a vibration dampener material that dampens horizontal and vertical vibration force.

## Description

### TECHNICAL FIELD

This document relates to sensors for an autonomous vehicle, and specifically, the configuration, placement, and orientation of autonomous vehicle sensors.

### BACKGROUND

Autonomous vehicle navigation is a technology that can control the autonomous vehicle to safely navigate towards a destination. A prerequisite for safe navigation and control of the autonomous vehicle includes an ability to sense the position and movement of vehicles and other objects around an autonomous vehicle, such that the autonomous vehicle can be operated to avoid collisions with the vehicles or other objects. Thus, multiple sensors located on a vehicle that can be used for detecting objects external to the vehicle are needed for autonomous operation of a vehicle.

### SUMMARY

This patent document discloses techniques that may be incorporated into embodiments of autonomous trucks for installation and operation of a rear-mounted radar, which may typically be mounted on truck chassis. In some embodiments, the radar may be mounted on a platform designed to mitigate adverse impact of road vibrations on operation of vehicle mounted radars. One technique relates to an apparatus that includes one or two vibration dampener couplings. Another technique relates to turning off a radar for a predetermined duration upon detection of a vibration event.

In one example aspect, a vehicular radar installation apparatus is disclosed. The apparatus includes a platform that is affixable to a rear of a truck cabin such that the platform, upon installation on the truck, allows secure mounting of a rear-facing radar at an elevation between a lower threshold and an upper threshold, the lower threshold and the upper threshold being selected to enable detection of objects using a radar view underneath a trailer attached to the truck.

In another example aspect, an apparatus is disclosed. The apparatus includes a base plate comprising a top surface and a bottom surface, the base plate comprising one or more through-holes; a bracket having a horizontal portion and a vertical portion that is perpendicular to the horizontal portion wherein the horizontal portion comprises one or more through-holes that align with corresponding one of more through-holes of the base plate; one or more fasteners extending through the one or more through-holes of the horizontal portion and the one or more through-holes of the base plates configured to rigidly couple the base plate with the bracket; and one or more washers having base portions having base portion openings and cylindrical portions surrounding the base portion openings and extending in a vertical direction, wherein cross-sections of the cylindrical portions allow the cylindrical portions to be inserted into the one or more through-holes of the horizontal portion of the bracket and further allow insertion of the one or more fasteners through the cylindrical portions and the one or more openings of the base plate such that the base portions of the one or more washers provide a separation between the bottom surface of the base plate and a top surface of the horizontal portion of the bracket.

In another example aspect, a method of controlling operation of a vehicle, includes: monitoring, by a processor on a vehicle, status reports from one or more radar units disposed on the vehicle; transmitting, upon receiving a status report from a radar unit of the one or more radar unit that the radar unit has experienced a disturbance, a reset request to a controller of the one or more radar units, wherein a power to the radar unit is turned off for a pre-determined time period due to the reset request; and determining, at a time after the pre-determined time period, whether the radar unit has successfully power cycled and is operating as expected.

In another example aspect, a radar controller includes one or more radar units disposed on a vehicle, wherein at least one radar unit is affixed to a rear of the vehicle using the above-described apparatus, a processor disposed on the vehicle; and a vehicle controller unit communicatively coupled with the processor, wherein the processor is configured to implement the above-described method.

In yet another example aspect, a vehicle controller unit includes a controller on a vehicle configured to control power to one or more radar units, the controller being communicatively coupled via a controller area network with a processor on the vehicle, the controller configured to: receive a reset request from the processor; power cycling radar units from the one or more radar units identified in the reset request, wherein the power cycling a particular radar unit comprises turning off power to the particular radar unit for a duration that allowed the particular radar unit to cool down below a threshold prior to being powered on.

The above and other aspects and their implementations are described in greater detail in the drawings, the descriptions, and the claims.

### BRIEF DESCRIPTION OF THE DRAWING

FIG. 1 shows an example of a radar mounted on a rear portion of a truck cabin.
FIG. 2 shows a front view of a radar mounted on a rear portion of a truck cabin.
FIG. 3A-3C show various configurations of rear-mounted radars.
FIG. 4 shows a block diagram of an example vehicle ecosystem in which an exemplary sensor system for an autonomous vehicle can be implemented.
FIG. 5 shows an arrangement of a base plate and a bracket that is mountable to rear side of a truck such that a radar can be mounted on the bracket for operation.
FIG. 6 shows an example of a bracket and a radar mount.
FIG. 7 is a close-up of an example of a fastener used to securely attach a bracket to a base plate.
FIG. 8 shows an arrangement of mounting a radar to a bracket.
FIG. 9 is a front view of a radar module.
FIG. 10 shows an example of a vibration absorbing washer.
FIG. 11 depicts a fastener used for securely attaching a radar to a bracket.
FIG. 12 depicts a bolt and a sleeve used for a truck-mountable radar platform to be securely fastened to a rear-side of a truck cabin.
FIG. 13 is a top view of a base plate and a horizontal portion of a bracket.
FIG. 14 shows an example of a rubber gasket that may be used for rigid affixation of the base plate or bracket.
FIG. 15A depicts a detailed view of ribbed face of a grommet used by some embodiments.
FIGS. 15B - 15D depicted exploded view of various embodiments of a radar installation apparatus.
FIG. 16 is a flowchart of an example method of mitigating radar operation interruptions due to road vibrations.
FIG. 17A to 17I are graphs showing some test result examples.
FIGS. 18A to 18F are graphs showing some field test results.

### DETAILED DESCRIPTION

Section headings are used in the present document only to facilitate ease of understanding and do not limit scope of subject matter on a per-section basis. As such, features described in one section can be combined with other features described in another section.

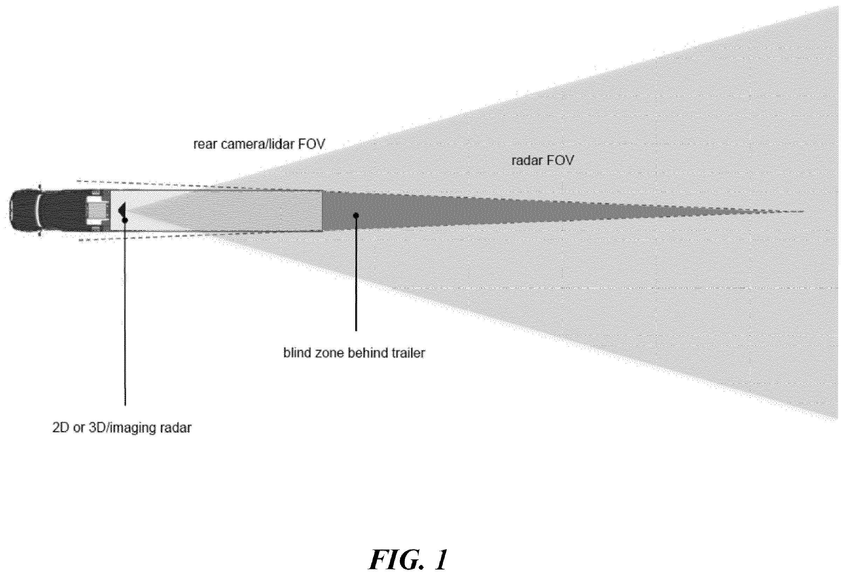

For safe driving of autonomous vehicles, it is desirable for the controller of autonomous driving to be able to detect vehicles or other objects in its rear view. For this purpose, a radar may be fitted to provide a view of the back side of the autonomous vehicle. FIG. 1 shows a top view example of an autonomous truck with a 2D or 3D imaging radar fitted on a top side of the truck cabin. The truck may also be fitted with rear facing cameras or light detection and ranging radars (LIDARs), which offers the controller a radar field of view (FOV) as depicted in FIG. 1. However, trucks often operate with a trailer attached in the back, which tends to create a blind zone behind the truck-trailer combination such that objects in the blind zone may not be detected by a conventional roof-top radar.

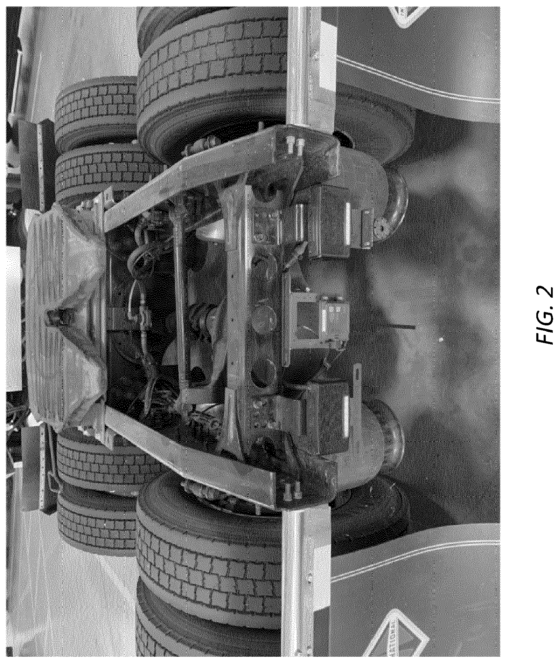

FIG. 2 shows a ground level radar (arrow) that may be used to overcome the problem of blind zone. Such a radar may be mounted below truck frame such that the radar is able to detect objects behind the truck and trailer by scanning through airspace under the truck/trailer combination.

For example, a typical vehicular installation of a rear radar may be configured to allow radar signal to travel under the trailer to detect vehicles behind the vehicle. In a typical scenario, the truck chassis or body frame may be at a first distance above road surface during use. The first distance may comprise a nominal distance that may vary slightly based on factors such as tire pressure, load weight being carrier by the vehicle, air temperature and so on. In such cases, the radar may be installed at a second distance above the road surface, as further described below.

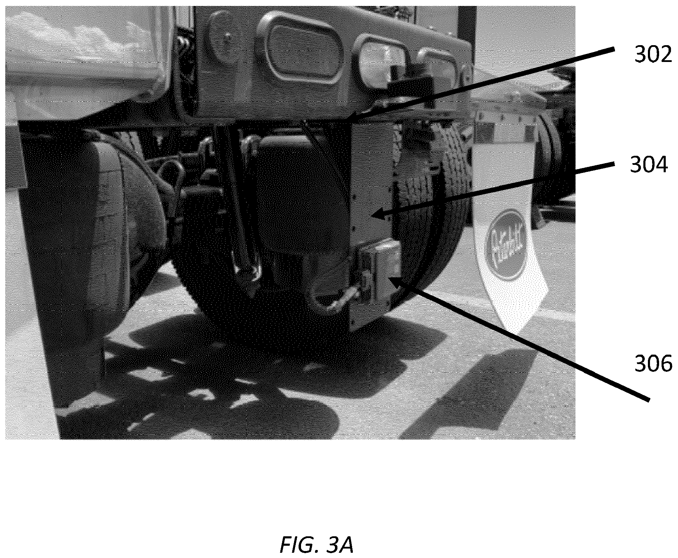

FIG. 3A shows a side view of such a radar that is mounted on a vertical mounting plate that is affixed to the truck frame at the top. The vertical mounting plate allows the radar to be positioned at a sufficiently low elevation with respect to the truck frame to provide under-truck visibility to the radar.

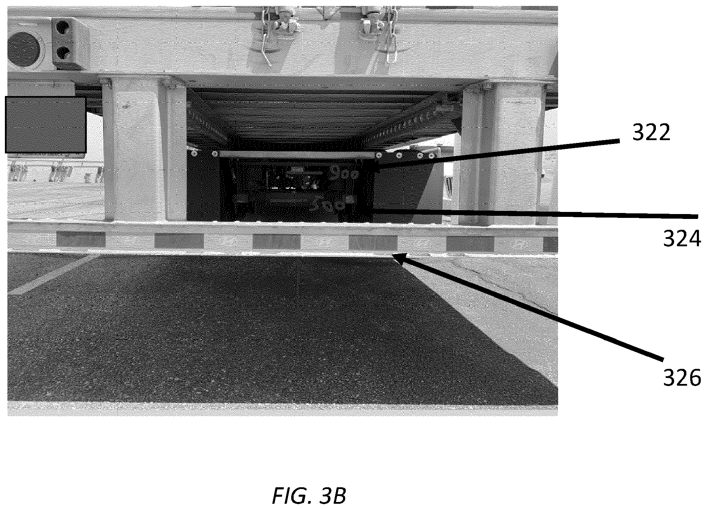

FIG. 3B shows dimensions of one typical configuration of trailers used in the autonomous trucking industry. The picture depicts underside view of the trailer as seen from the rear towards the trailer end that is hitched to truck cabin. A typical radar mounting vertical surface on the rear of the truck, which still provides visibility to/from the backside of the trailer may be between 900 mm (322) to 500 mm (324), with a typical installation at between 650 and 800 mm. A radar installation any higher than the upper threshold may experience performance degradation due to radar waves impinging upon the underside of the trailer, causing electromagnetic distortions and inaccuracies. Similarly, a radar installation below the lower threshold may experience operational challenges such as blind spot caused by the backside frame structure 326 (shown at around 600 mm in the figure) and also due to potential damage due to road debris.

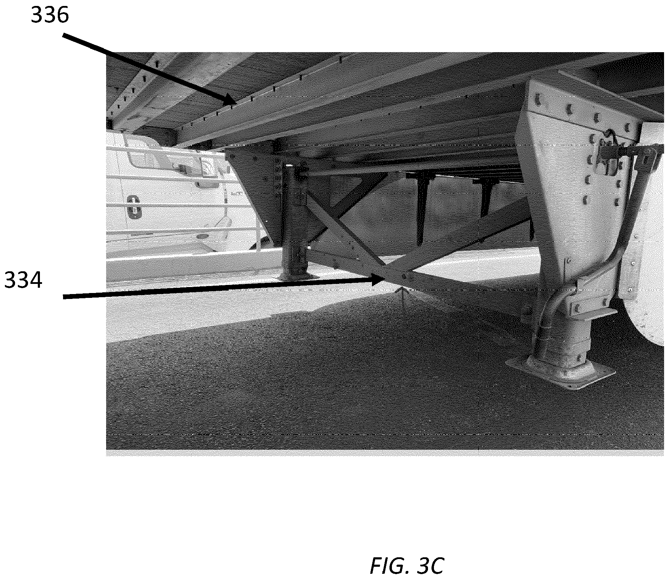

FIG. 3C shows another typical configuration of a trailer used with an autonomous truck. The back / under side of the trailer includes a supporting truss 334 that typically has a ground clearance of 400 mm. This truss also acts as a shield by preventing road debris from flying into a radar placed slightly higher than the horizontal member of the truss at the rear of the truck cabin. The trailer floor 336 forms the upper threshold for radar installation because any radar installed close to this level may experience electromagnetic distortion due to the outside (road facing) surface of the trailer floor 336.

Based on the above-described typical trailer configurations, a rear facing radar may be placed at a height between a lower threshold and an upper threshold. The lower threshold is configured to be sufficiently high to allow protection from road debris, or bumping into speed bumps and other road objects during operation. The upper threshold is configured such that the radar waves fund sufficient opening under the bottom surface of the trailer and mitigate electromagnetic distortions of radar waveforms due to reflections from the trailer bottom surface. The upper threshold and the lower threshold may depend on make/model of the truck, the dimensions of the radar, and expected trailers that may be hitched to the truck. The typical dimensions may be between 650 mm (lower threshold) and 800 mm (upper threshold).

Vibration tests show that the radar mounted on the rear chassis may suffer from transient shock response when the truck passes rough road surfaces at high speeds (>40mph), which may cause the radar DSP to fail and stops publishing pointcloud data. The shock may experience a force of 100G (on test trucks) in the lateral direction (y-axis), the peak frequency is at between 1,2k~1,8kHz with a bandwidth of 300~500Hz (actual frequency profile may vary by trucks). Depending on the road condition, the shock response may last between 0.02~1s.

The proposed radar shock mitigation solution comprises at least two aspects: a new radar mounting design that absorbs the shock energy to reduce the vibration of the radar sensor head, and a new software feature to monitor the radar status via status reports and performs power cycling to bring the radar back online in case the mechanical part fails. In various embodiments either one or both of these features may be incorporated into embodiments.

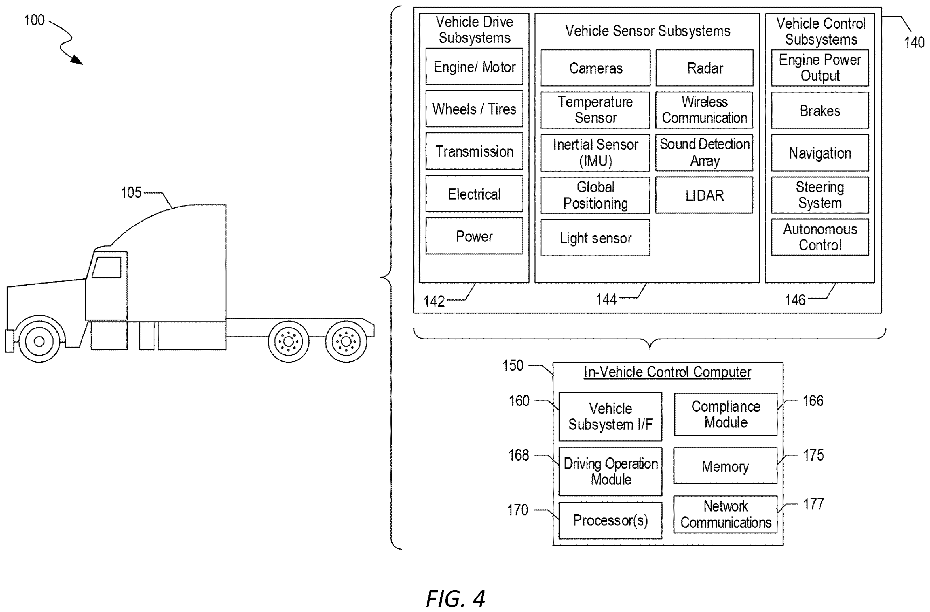

FIG. 4 shows a block diagram of an example vehicle ecosystem 100 in which example embodiments for improving parking brake operation can be implemented. With the vehicle ecosystem 100, for example, embodiments for determining vehicle operation state, inhibiting or allowing parking brake commands, determining parking brake health, and engaging parking brakes or alternative brakes are implemented for an autonomous vehicle 105. Examples of autonomous vehicle 105 include a car, a truck, or a semi-trailer truck. The vehicle ecosystem 100 includes several systems and subsystems that can generate and/or deliver one or more sources of information/data and related services to the in-vehicle control computer 150 that may be located in an autonomous vehicle 105. The several system and subsystems can be controlled and operated by the in-vehicle control computer 150. The in-vehicle control computer 150 can be in data communication with a plurality of vehicle subsystems 140, all of which can be resident in an autonomous vehicle 105. A vehicle subsystem interface 160 is provided to facilitate data communication between the in-vehicle control computer 150 and the plurality of vehicle subsystems 140. The vehicle subsystem interface 160 can include a wireless transceiver, a Controller Area Network (CAN) transceiver, an Ethernet transceiver, serial ports, gigabit multimedia serial link 2 (GMSL2) ports, local interconnect network (LIN) ports, or any combination thereof.

The autonomous vehicle 105 may include various vehicle subsystems that support the operation of autonomous vehicle 105 and that can be controlled or operated by the in-vehicle control computer 150. The vehicle subsystems may include a vehicle drive subsystem 142, a vehicle sensor subsystem 144, and/or a vehicle control subsystem 146. The vehicle drive subsystem 142 may include components operable to provide powered motion for the autonomous vehicle 105. In some embodiments, the vehicle drive subsystem 142 may include an engine or motor, wheels/tires, a transmission, an electrical subsystem, and a power source (e.g., battery and/or alternator).

The vehicle sensor subsystem 144 may include a number of sensors configured to sense information about an environment or condition of the autonomous vehicle 105. For example, the vehicle sensor subsystem 144 may include an inertial measurement unit (IMU), a Global Positioning System (GPS) transceiver, a RADAR unit, a laser range finder or a light detection and ranging (LiDAR) unit, and/or one or more cameras or image capture devices. The vehicle sensor subsystem 144 may also include sensors configured to monitor internal systems of the autonomous vehicle 105 (e.g., an O₂ monitor, a fuel gauge, an engine oil temperature).

In some embodiments, the vehicle sensor subsystem 144 includes sensors that collect signals from which a speed of the autonomous vehicle 105 can be determined. For example, the vehicle sensor subsystem 144 includes sensors configured to collect sensor signals describing a rotational speed of each wheel or tire of the autonomous vehicle 105, sensor signals describing an operation of the vehicle drive subsystem 142 (e.g., rotational speed of a transmission output shaft, rotational speed of engaged gears, engine or motor power consumption), and/or the like.

The IMU may include any combination of sensors (e.g., accelerometers and gyroscopes) configured to sense position and orientation changes of the autonomous vehicle 105 based on inertial acceleration. For example, the IMU is configured to collect sensor signals from which a speed of the autonomous vehicle 105 can be determined. The GPS transceiver may be any sensor configured to estimate a geographic location of the autonomous vehicle 105. For this purpose, the GPS transceiver may include a receiver/transmitter operable to provide information regarding the position of the autonomous vehicle 105 with respect to the Earth. The RADAR unit may represent a system that utilizes radio signals to sense objects within the local environment of the autonomous vehicle 105. In some embodiments, in addition to sensing the objects, the RADAR unit may additionally be configured to sense the speed and the heading of the objects proximate to the autonomous vehicle 105. The laser range finder or LIDAR unit may be any sensor configured to sense objects in the environment in which the autonomous vehicle 105 is located using lasers. The cameras may include one or more devices configured to capture a plurality of images of the environment of the autonomous vehicle 105. The cameras may be still image cameras or motion video cameras.

The vehicle control subsystem 146 may be configured to control operation of the autonomous vehicle 105 and its components. Accordingly, the vehicle control subsystem 146 may include various elements such as a throttle, one or more brake units or subsystems, a navigation unit, and/or a steering system. The throttle may be configured to control, for instance, the operating speed of the engine and, in turn, control the speed of the autonomous vehicle 105.

In some embodiments, the one or more brake units or subsystems include various brakes configured to slow and/or stop vehicle travel. The brake unit can include any combination of mechanisms configured to decelerate the autonomous vehicle 105. The brake unit can use friction to slow the wheels in a standard manner. For example, the brake units or subsystems may include disc or drum brakes of wheels of the autonomous vehicle 105. In particular, the brake units or subsystems includes parking brakes configured to secure a motionless or stationary state of the autonomous vehicle 105. The parking brakes may be configured for use when the autonomous vehicle is in or near a stationary state, and engagement of the parking brakes while the vehicle is in motion may lead to damage of the parking brakes and other components of the vehicle. In some embodiments, the brake units or subsystems include alternative brake units that may be operated to support the function of the parking brakes in securing a motionless state of the vehicle. For example, the alternative brake units include foundation brakes. In some embodiments, the autonomous vehicle 105 includes at least one primary foundation brake and at least one redundant foundation brake.

The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS transceiver and one or more predetermined maps so as to determine the driving path for the autonomous vehicle 105.

The vehicle control subsystem 146 may be configured to control operation of power distribution units located in the autonomous vehicle 105. The power distribution units have an input that is directly or indirectly electrically connected to the power source of the autonomous vehicle 105 (e.g., alternator). Each power distribution unit can have one or more electrical receptacles or one or more electrical connectors to provide power to one or more devices of the autonomous vehicle 105. For example, various sensors of the vehicle sensor subsystem 144 such as cameras and LiDAR units may receive power from one or more power distribution units. The vehicle control subsystem 146 can also include power controller units, where each power controller unit can communicate with a power distribution unit and provide information about the power distribution unit to the in-vehicle control computer 150, for example.

Many or all of the functions of the autonomous vehicle 105 can be controlled by the in-vehicle control computer 150. The in-vehicle control computer 150 may include at least one data processor 170 (which can include at least one microprocessor) that executes processing instructions stored in a non-transitory computer readable medium, such as the data storage device 175 or memory. The in-vehicle control computer 150 may also represent a plurality of computing devices that may serve to control individual components or subsystems of the autonomous vehicle 105 in a distributed fashion. For example, the in-vehicle control computer 150 includes a driving operation module 168 and a brake control module 166, in some embodiments. In some embodiments, the brake control module 166 implements techniques described herein to safely engage parking brakes and monitor parking brake health.

The individual components or modules of the in-vehicle control computer 150 may operate and communicate together to cause the autonomous vehicle 105 to operate. The various components and modules of the in-vehicle control computer 150 can each be associated with a domain or functionality. In some examples, components or modules of the in-vehicle control computer 150 feed into and communicate with each other in a hierarchy or order. Outputs of an upstream module of the in-vehicle control computer 150 are inputs to a downstream module of the in-vehicle control computer 150. For example, the driving operation module 168 determines operations to be performed by the vehicle and can provide braking commands to the brake control module 166. In this way, the driving operation module 168 may be upstream of the brake control module 166, as the driving operation module 168 can send commands or provide outputs to be inputs for the brake control module 166. In some embodiments, more than one module or component of the in-vehicle control computer 150 may be upstream of the brake control module 166.

In some embodiments, the data storage device 175 may contain processing instructions (e.g., program logic) executable by the data processor 170 to perform various methods and/or functions of the autonomous vehicle 105, including those described in this patent document. The various components and modules of the in-vehicle control computer 150 can be implemented as software modules in the processing instructions. Thus, in some embodiments, the data storage device 175 includes processing instructions for each of a plurality of modules of the in-vehicle control computer 150.

The data storage device 175 may include instructions to transmit data to, receive data from, interact with, or control one or more of the vehicle drive subsystem 142, the vehicle sensor subsystem 144, and the vehicle control subsystem 146. In some embodiment, additional components or devices can be added to the various subsystems or one or more components or devices (e.g., temperature sensor shown in FIG. 4) can be removed without affecting various embodiments described in this patent document. The in-vehicle control computer 150 can be configured to include a data processor 170 and a data storage device 175.

The in-vehicle control computer 150 may control the function of the autonomous vehicle 105 based on inputs received from various vehicle subsystems (e.g., the vehicle drive subsystem 142, the vehicle sensor subsystem 144, and the vehicle control subsystem 146). For example, the in-vehicle control computer 150 may use input from the vehicle control subsystem 146 in order to control the steering system to avoid a high-speed vehicle detected in image data collected by overlapped cameras of the vehicle sensor subsystem 144, move in a controlled manner, or follow a path or trajectory. As another example, the in-vehicle control computer 150 (or a component or module thereof) may use input from the vehicle sensor subsystem 144 to determine a vehicle speed or a vehicle operation state, which can be used to inhibit or allow parking brake commands.

In some embodiments, the in-vehicle control computer 150 can be operable to provide control over many aspects of the autonomous vehicle 105 and its subsystems. For example, the in-vehicle control computer 150 may transmit instructions or commands to cameras of the vehicle sensor subsystem 144 to collect image data at a specified time, to synchronize image collection rate or frame rate with other cameras or sensors, or the like. Thus, the in-vehicle control computer 150 and other devices, including cameras and sensors, may operate at a universal frequency, in some embodiments. As another example, the in-vehicle control computer 150 (or a component or module thereof) may transmit instructions to brake units of the autonomous vehicle 105 to cause engagement of the brake units to slow the autonomous vehicle, stop the autonomous vehicle, or secure the autonomous vehicle in a stationary position.

In some embodiments, the in-vehicle control computer 150 includes a network communicator 177 which may be configured to communicate with remote computer located outside of the autonomous vehicle 105. For example, the in-vehicle control computer 150, via the network communicator 177, communicates with an oversight system to report instances in which a parking brake is engaged, report instances of evasive maneuvering, receive navigational instructions or commands, and/or the like.

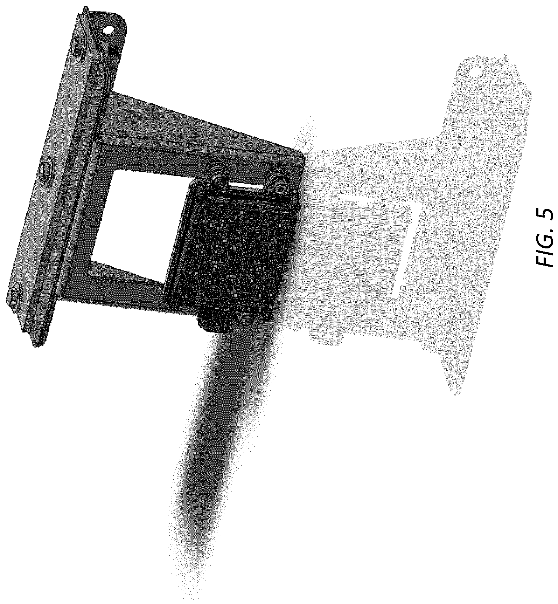

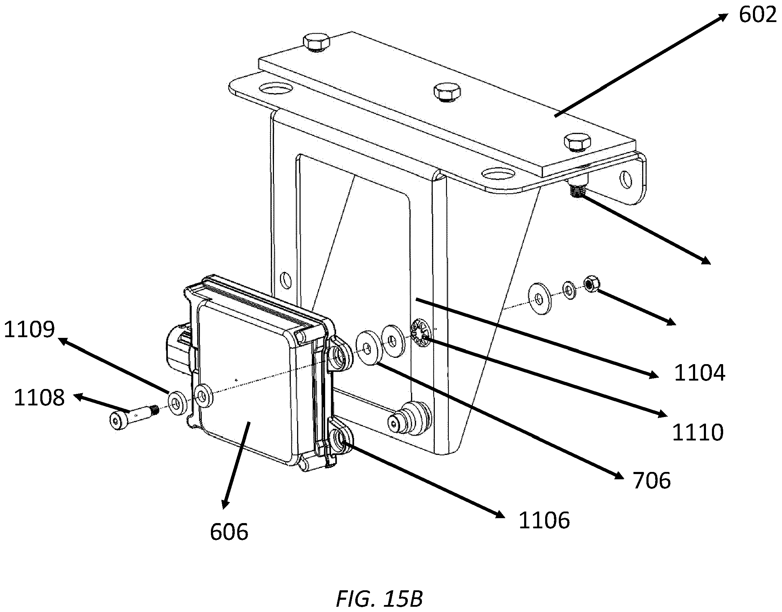

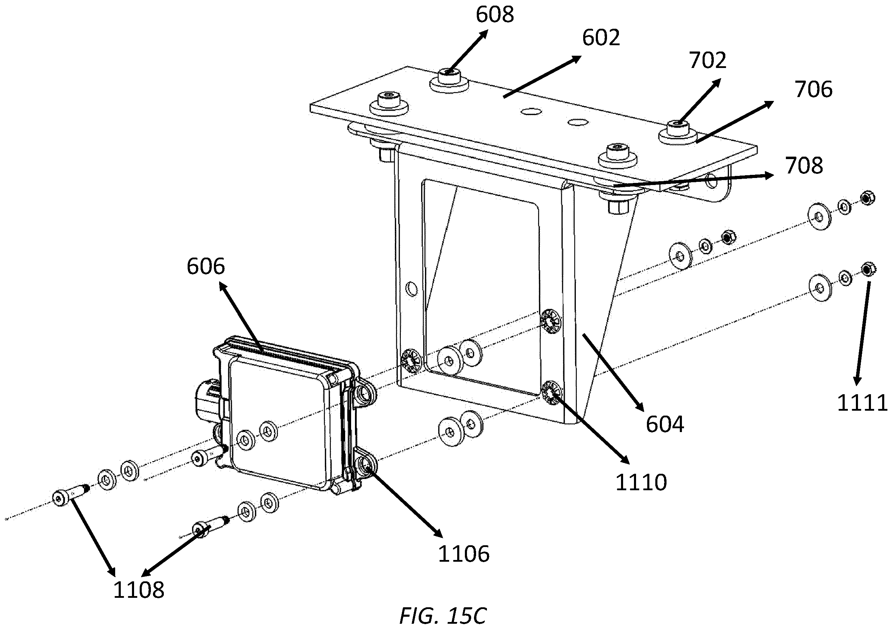

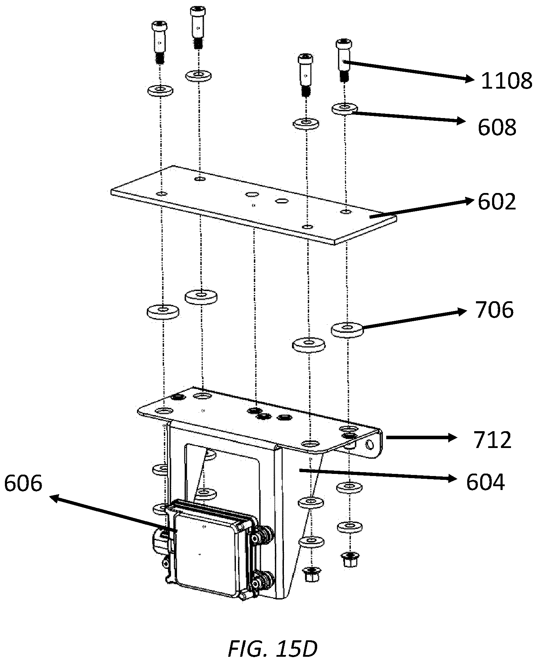

FIG. 5 shows an example of a bracket and a radar mount. In this embodiment, the base plate is integrated with the bracket that mounts the radar housing. The combination is attached to a truck chassis using a number of screws (three are shown in the figure). Such an arrangement may have the disadvantage that the vibrations introduced into the truck due to road conditions may be travel across the entire fixture depicted in FIG. 5 and cause radar to vibrate and either operate erroneously or reboot the radar unit which may cause interrupt vehicle operation. An exploded view of the bracket and radar mount is further described with reference to FIG. 15B, 15C and 15D.

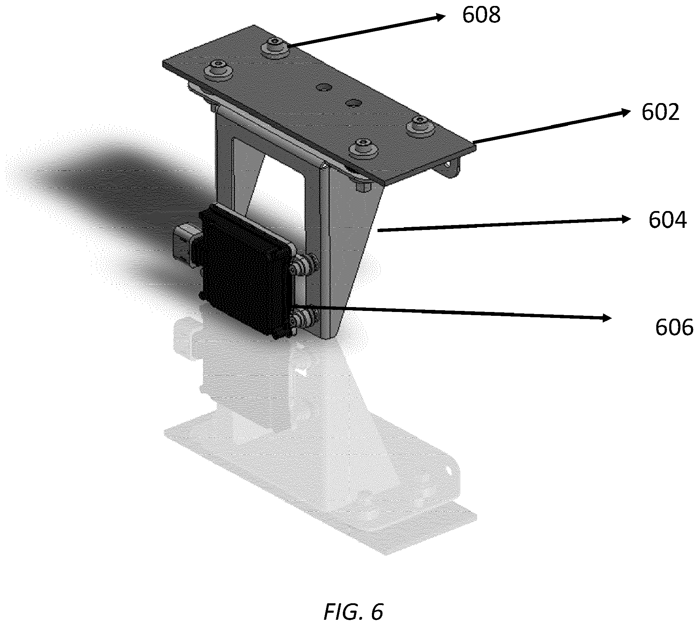

FIG. 6 shows an arrangement of a base plate 602 and a bracket 604 that is mountable to rear side of a truck such that a radar can be mounted on the bracket for operation. FIG. 6 further shows a bracket 604 that is attached to the base plate 602 substantially at a right angle and a radar mount 606 which may be used to house a radar. The fasteners 608 may be used to attach the base plate 602 to the bracket 604. Furthermore, the through holes towards the middle of the base plate 602 may be used to attach the base plate to the bottom side of a truck chassis using an attachment such as nut and bolt.

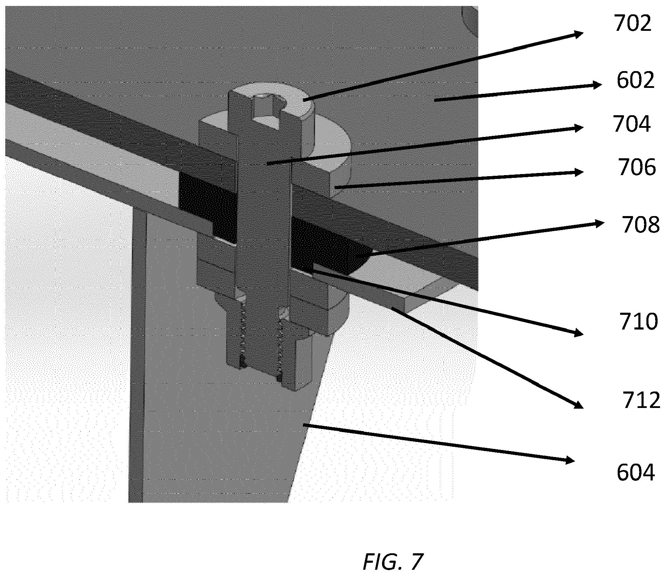

FIG. 7 is a close-up of an example of a fastener mechanism used to securely attach a bracket to a base plate. The fastener mechanism is used to securely affix the bracket 604 to the base plate 602. 702 depicts a top end of the fastener that has penetrated through the base plate 602 may be optionally capped by a safety cap to minimize poking hazard to a human operator. 706 depicts a top ring or washer used to securely hold the fastener 704 after insertion through the through holes in the bracket and the base plate. 708 depicts a vibration dampener that is placed between a bottom surface of the base plate and a top surface 712 of the bracket, thus creating a separation between the base plate and the bracket while being securely fastened using the fastener 704. The dampener 708 may form a sleeve that wraps around entire circumference of the fastener 704. In some embodiments, the dampener 708 may include a slit or opening that runs along the vertical dimension for allowing easy placement and removal of the dampener. Furthermore, the dampener may be formed of a base portion that is broad and is the portion the separates the base plate from the bracket and a cylindrical protrusion 710 that fits within a spacing created between the through hole in the bracket and the fastener 704 inserted in the through hole. It will be appreciated by those of skill in the art that the protrusion 710 helps dampen or eliminate vibrational movement along horizontal directions (perpendicular to the vehicle, and in the direction of travel) and the base portion 710 helps dampen or eliminate vibrational movement in up-down direction during operation of a vehicle. In other words, the dampener 708 may be formed of upper and lower base portions, and may be formed of a compressible material. The upper base portion separates the base plate 602 from the top surface 712 by acting as dampening spacer between the base plate 602 and the top surface 712, as shown in figure 7. The upper base portion therefore helps to dampen or eliminate vibrational movement in an up-down direction, which may be a direction parallel to the length the fastener 704. The lower base portion of the dampener 708 comprises the cylindrical protrusion 710 which, in this example, separates the top surface 712 from the fastener 704, as shown in figure 7. This may be achieved by the protrusion 710 having a diameter such that the protrusion fits into a hole formed in the top surface 712, the hole also receiving the fastener 704. The diameter of the protrusion 710 may be equal to or less than the diameter of the upper portion of the dampener 708, as shown in figure 7, however other dimensions are possible as long as the protrusion 710 can fit within the hole in the top surface 712. The protrusion 710 therefore helps dampen or eliminate vibrational movement along horizontal directions, which may be a direction parallel the plane of the top surface 712 and the base plate 602. As explained above, this may be a direction parallel to the direction of travel of the vehicle.

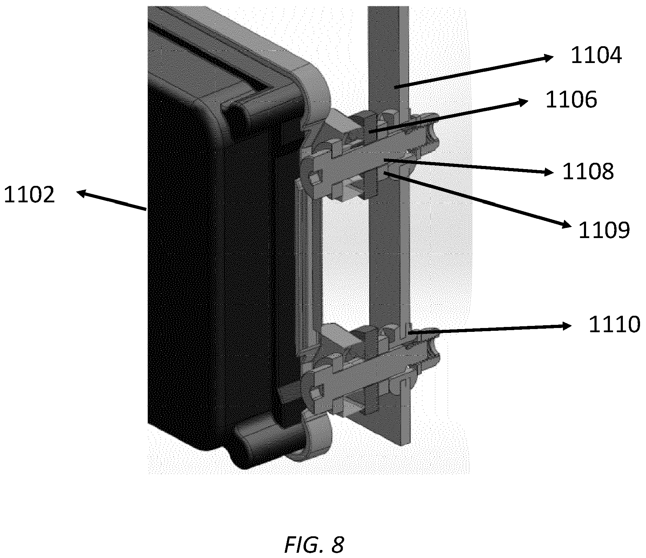

FIG. 8 shows an arrangement of mounting a radar housing 1102 to a bracket 1104 (which may be similar to the bracket 604). The radar housing 1102 may be fastened using a fastener receptacle 1106 through which a fastener 1108 is inserted and also inserted through a washer 1109 in a corresponding receiving through hole with a grommet 1110 on the bracket 1104. At the junction of the fastener and the radar housing and bracket, a dampener as described with respect to FIG. 7 may be used. This dampener may also have two portions - one that is used to dampen or eliminate vertical vibrations and the other that is used to dampen or eliminate horizontal x-y vibrations.

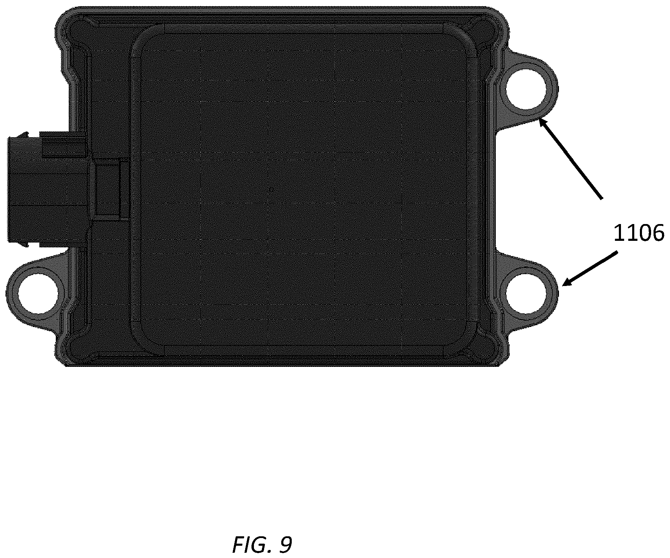

FIG. 9 is a front view of a radar module in which fastener receptacles 1106 are visible. The actual number of receptacles may include at least 2 and may include additional receptacles depending on weight of radar module to be mounted and other operational consideration.

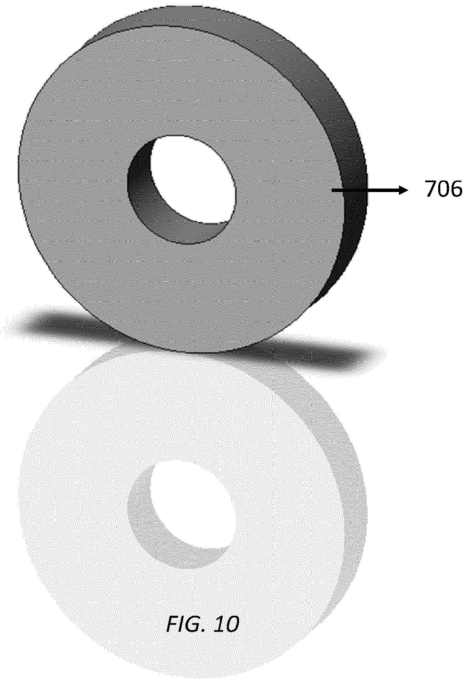

FIG. 10 shows an example of a vibration absorbing washer 706. As disclosed in the present document, the washer may be made of a vibration dampener material such as rubber foam, rubber or neoprene. Preferably, the material may dampen vibration energies at frequencies as disclosed herein because these frequencies may be commonly encountered during operation of an autonomous vehicle such as a truck with semi-trailer. In this embodiment, the cylindrical protruding portion of the washer is not shown for clarity.

In some embodiments, the grommet 1110 may be made up of a combination rubber/plastic material having an overall thickness of between 0.3 to 0.32 inches, with Durometer 57A hardness with medium hardness rating. In some embodiments, the washer 1109 may be made up of SBR rubber (styrene butadiene rubber) having a polyester fiber. The washer 1109 may bave a Durometer 70A hardness. In some embodiments, the fastener 1108 may be made of stainless steel, with a tensile strength of approximately 70,000 psi (pounds per square inch) and having Rockwell B55 hardness.

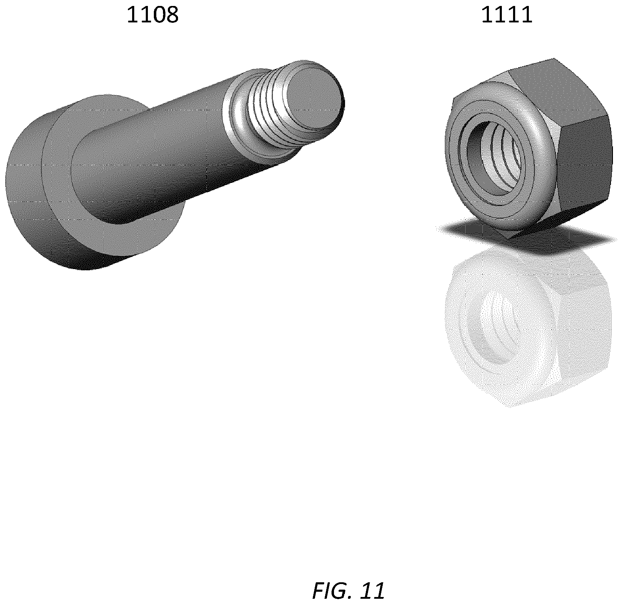

FIG. 11 depicts a fastener used for securely attaching a radar to a bracket. In some embodiments, the fastener may be in the form of a screw (left) and a nut, where the screw includes an unthreaded stem portion and a threaded stem portion. The unthreaded stem portion may be sufficiently long to allow insertion of the fastener through the bracket through hole and the base plate through hole and allow the threaded portion to protrude out such that the nut can be securely fastened to the screw. In some embodiments, a partially threaded screw may be used. The difference between a shoulder screw and a partially threaded screw may be that the shoulder may have a larger diameter than the threaded part.

Referring to the fastener depicted in FIG. 11, also shown in FIG. 7, reference numeral 704, the shoulder, or the unthreaded cylinder portion of the shoulder screw, functions as a hard stop for the nut 1111 to prevent the dampener washer and grommet (1109, 1110) from being over compressed. The total length of the washer assembly and the length of the shoulder are calculated so that when the nut is fully fastened to the end of the shoulder, the dampener washer and grommet are compressed to about 70% of its original thickness. This way, the screw-and-nut assembly is not too loose to induce excessive motion to the radar (1102), but the dampener washer and grommet are still elastic in response to vibration and shock.

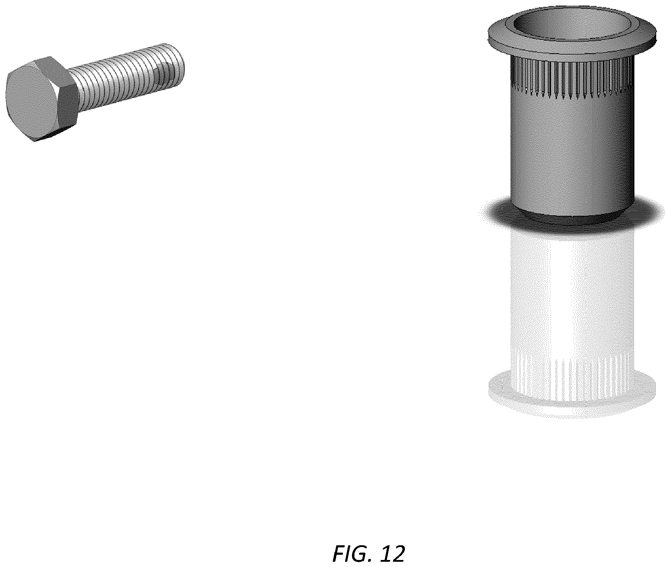

FIG. 12 depicts a bolt and a sleeve used for a truck-mountable radar platform to be securely fastened to a rear-side of a truck cabin.

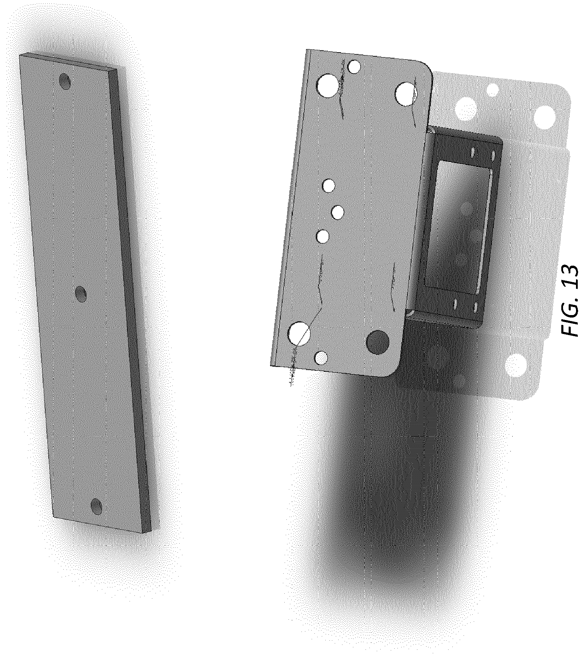

FIG. 13 is a top view of a base plate and a horizontal portion of a bracket. The base plate (bottom) may include multiple holes to allow secure fastening to the bracket (e.g., the larger holes) and also secure fastening to a truck chassis (smaller holes in the middle and towards edges). The base plate (top) may include holes spaced throughout the length of the base plate to allow secure fastening of the base plate to the truck.

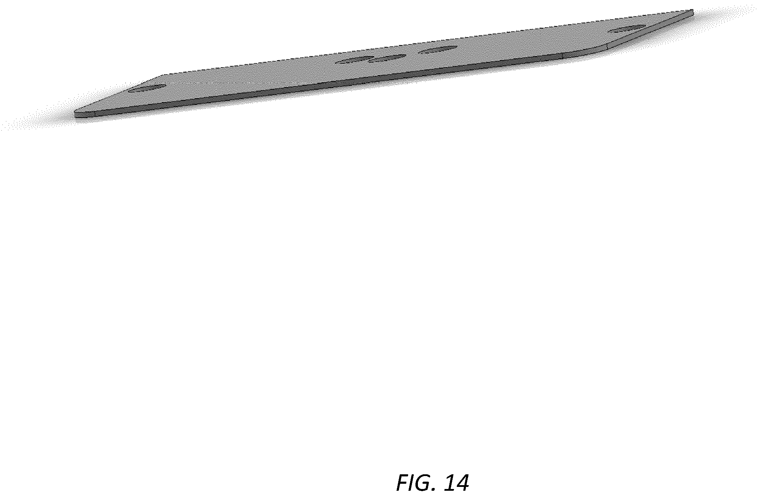

FIG. 14 shows an example of a rubber gasket that may be used for rigid affixation of the base plate or bracket.

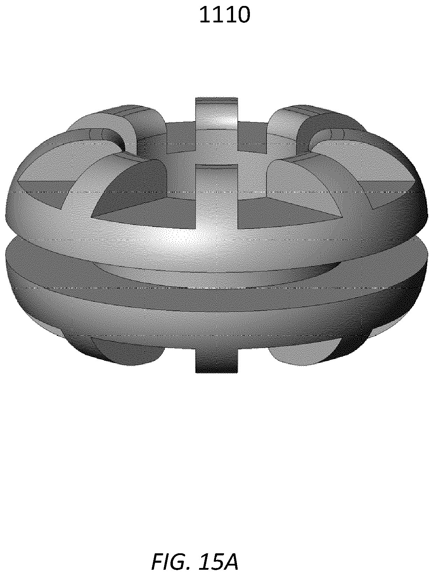

FIG. 15A depicts a detailed view of ribbed face of a grommet used by some embodiments.

FIGS. 15B - 15D depicted exploded view of various embodiments of a radar installation apparatus.

FIG. 15B depicts further details of examples of how a radar housing 606 is mounted to the bracket 1104. In particular, the fastener mechanism uses multiple washers 706, a grommet 11100 to securely affix the radar housing to the bracket, while providing vibrational shock absorbing feature as described herein.

FIG. 15C shows further details of the attachment of radar housing to the bracket and attachment of the base plate 604 to the bracket.

FIG. 15D provides another exploded view of the fastener mechanism used for attaching the base plate to the top surface 712 of the bracket. Although the details of the vibration dampener washer 706 are not visible in this view, further details may be found in FIG. 7.

In the above-described embodiments, the number of washers and their thicknesses may be selected to achieve an optimal total length of the assembly. For example, an oversized washer or a flat washer with extra thickness may be used. One set of washers may be placed on the radar side, directly under the screw head (not visible in FIG. 8 because it is hidden by the radar).

### Shock-reducing Radar Mounting Examples

### Mechanical Design Examples

The mechanical design of the radar mounting is shown with respect to FIGS. 5 to 15. The primary functional parts include a new bracket with lower stiffness and two damper assemblies: one in between the radar bracket and the truck's chassis cross member, and the other in between the radar and the bracket. Additional details of the damper assemblies are described in the present document.

### Verification results

The effectiveness of disclosed techniques was tested using actual trucks and other vehicles and measuring the reduction in vibrations seen at the radar housing and also corresponding functional stoppage of radar due to vibrational reset.

### Road Test

The verification test drove the truck at 50mph on rough roads and crossing railroad. The passing criteria is defined as the radar performing normal during the trips. In addition, accelerometers are installed on the chassis and the radar bracket respectively to study the shock response. The analysis is done by comparing the time-domain acceleration, the Fourier transform and the power spectrum density. Note that the actual acceleration on the radar sensor head is different to the measurement from the radar bracket as there is another damping layer in the radar mounting hole.

The following verification data is gathered from one set of road tests. The maximum acceleration on the bracket is reduced to less than 50G. In addition, the power density is reduced significantly for all shock patterns.

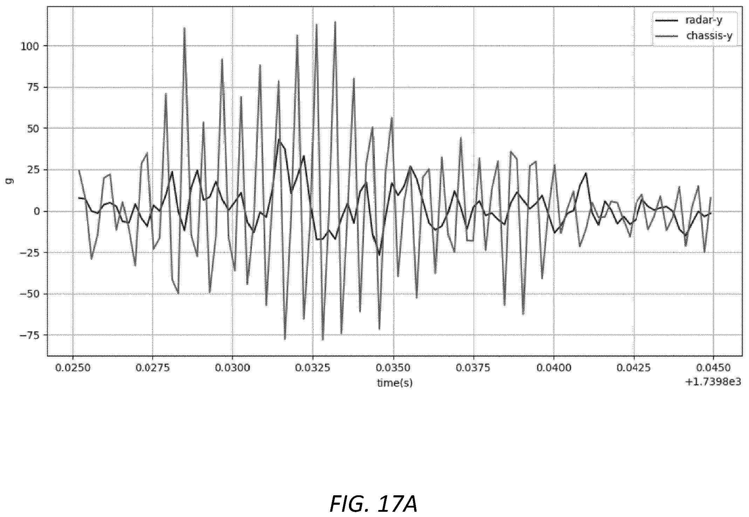

FIGS. 17A to 17C show the response to a 0.02s shock input.

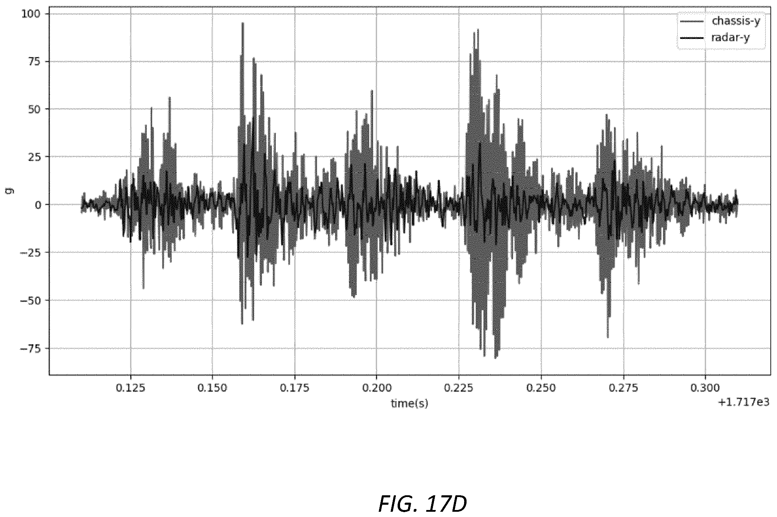

FIGS. 17D to 17F show the response to multiple shock peaks in 0.2s:

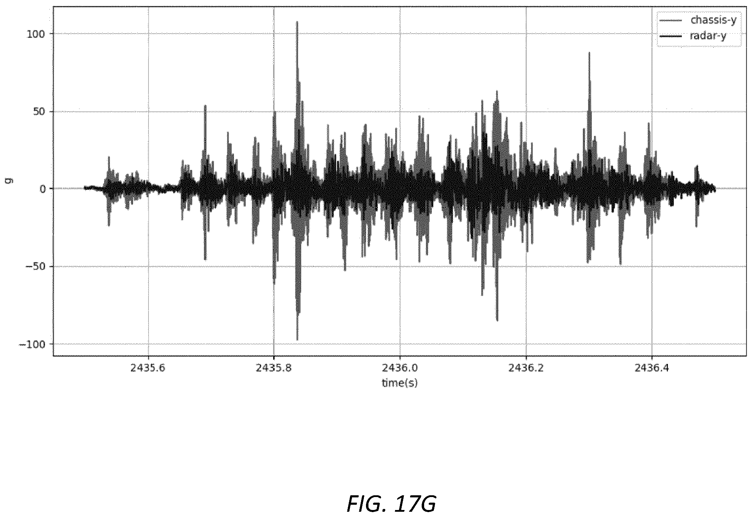

FIGS. 17G to 17I show response to a 1s shock input period.

In FIG. 17A, 17D and 17G, time represents horizontal axis and vibrational force in units of gravity are shown along vertical axes.

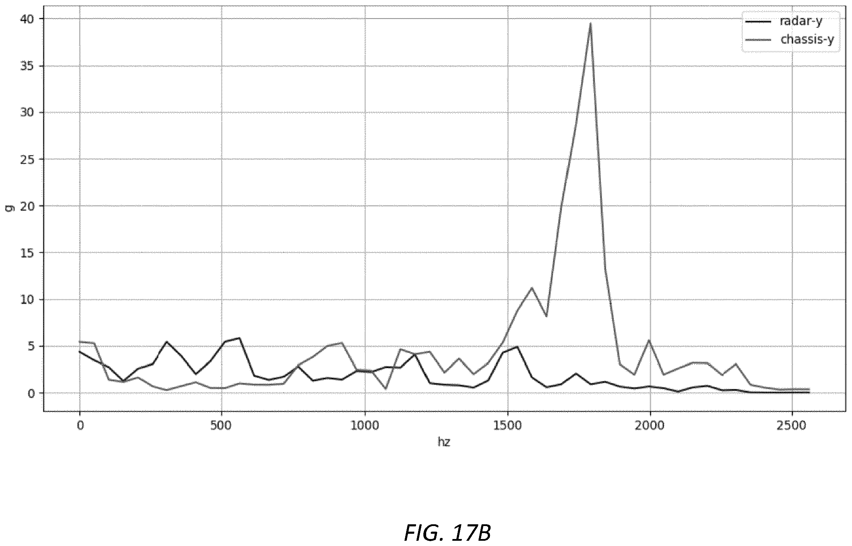

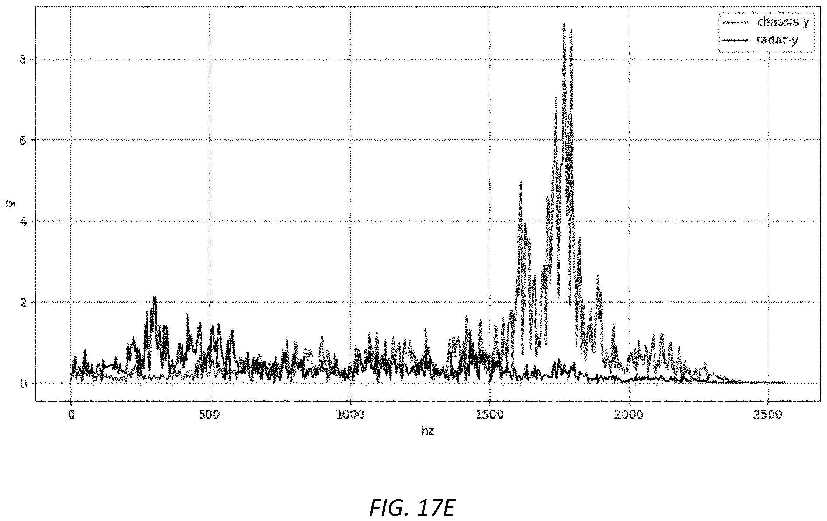

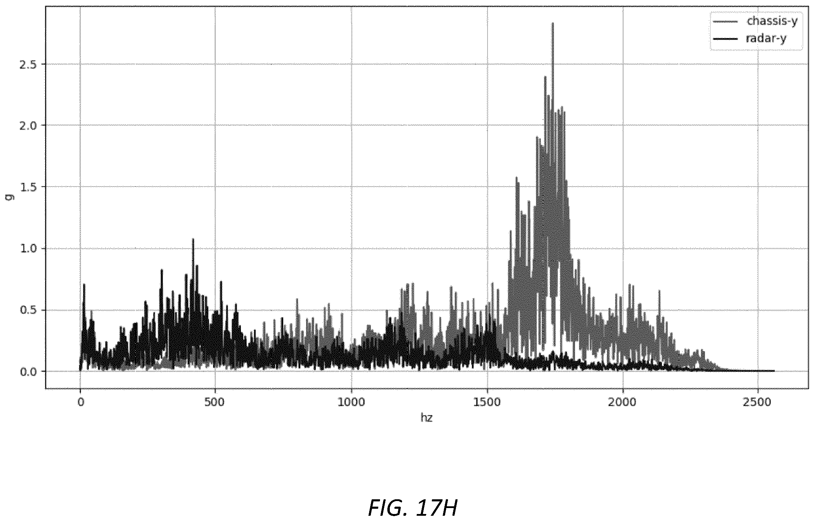

In FIG. 17B, 17E and 17H, frequency represents horizontal axis and vibrational force in units of gravity are shown along vertical axes.

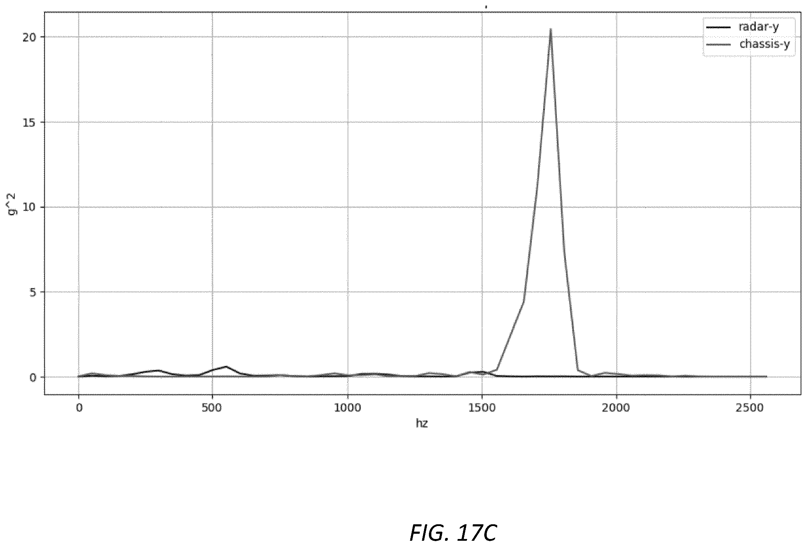

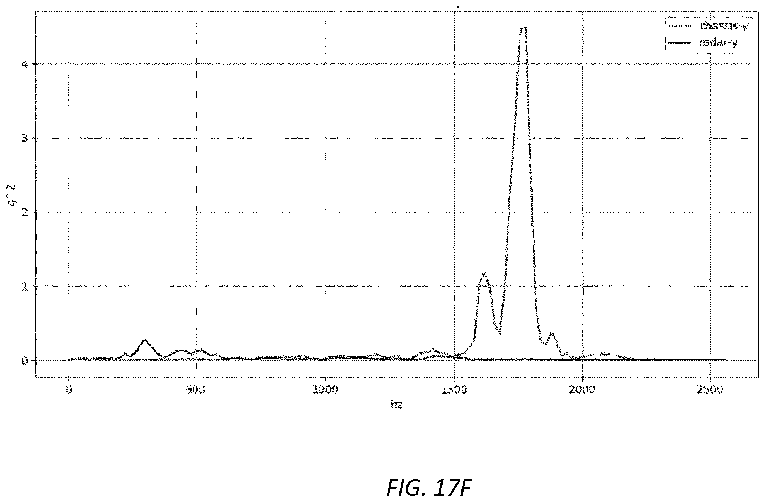

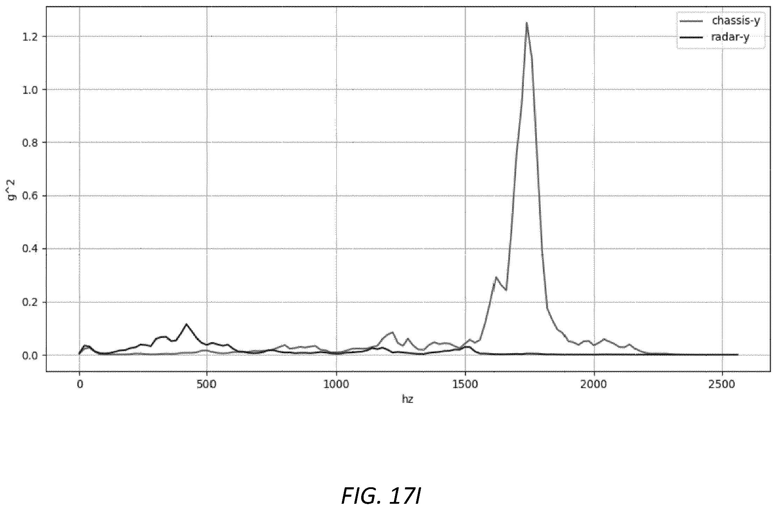

In FIG. 17C, 17F and 17I, frequency represents horizontal axis and vibrational force power density in units of gravity-squared are shown along vertical axes.

The same verification process is done on different models of trucks with radar installed. Both the radar 5 stability (radar 5 simply represents one of the multiple radars installed on the truck) and vibration profile are analyzed. The table below lists the test outcomes for all vehicles.

| **Vehicle ID** | **Radar 5 Stability** | **Vibration Profile** |
|---|---|---|
| B2 | Passed all | One peak at 1.8kHz from chassis, mitigated by the damping system |
| B3 | Failed extreme cases | Other than the 1kHz peak, a secondary peak at 500Hz on the chassis, typically appears during continuous rough road surface input (∼1s), unable to damp the secondary peak |
| B5 | Passed all | One peak at 1.8kHz from chassis, mitigated by the damping system |
| D1 | Passed all | One peak at 1.5kHz, mitigated by the damping system. Maximum acceleration 40G from the chassis (better than the mule trucks). |

### Dragway test

Due to the safety concern (speeding) to the previous verification route, a verification procedure was performed on a test track to replicate the rough road conditions. Speed bumps were set up at the center of the test track. During the verification run, the truck goes pass the speed bumps at different speed levels. The verification is considered successful if the radar remains operational during the test. The following verification data is gathered from one set of runs on a truck. The accelerometer data was recorded to see if the speed bumps can replicate the same vibration profile.

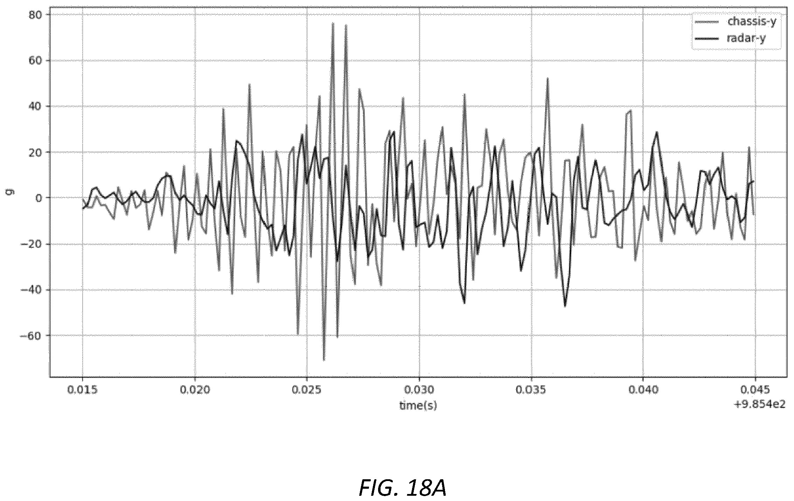

FIGS. 18A-18C show the input and the response of a 0.03s shock when the truck passes the 2-in speed bumps at 70mph:

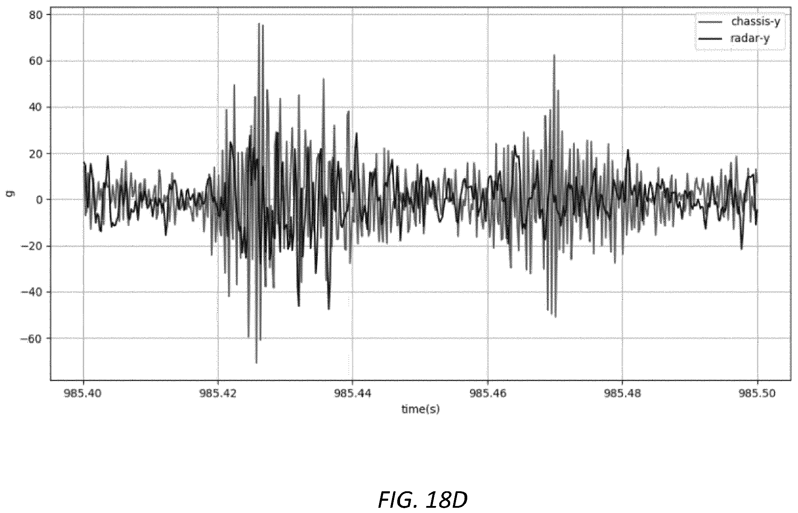

FIGS. 18D to 18F the input and the response in 0.1s when the truck passes the speed bumps at 70mph.

In FIG. 18A, 18D, time represents horizontal axis and vibrational force in units of gravity are shown along vertical axes.

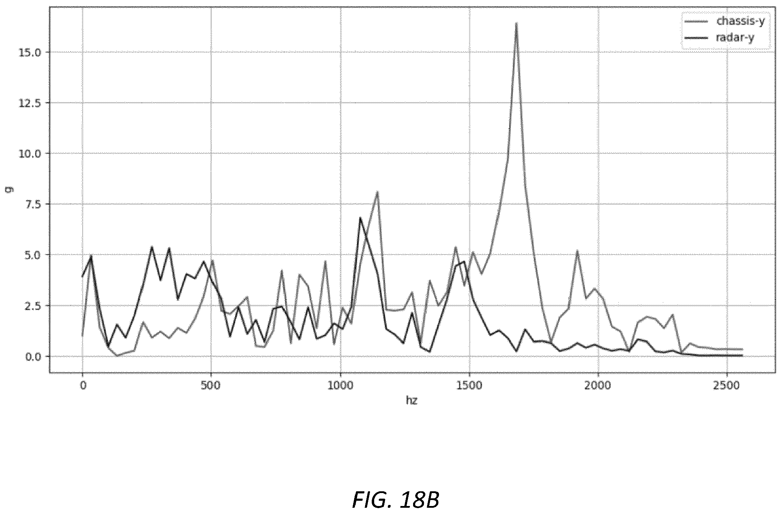

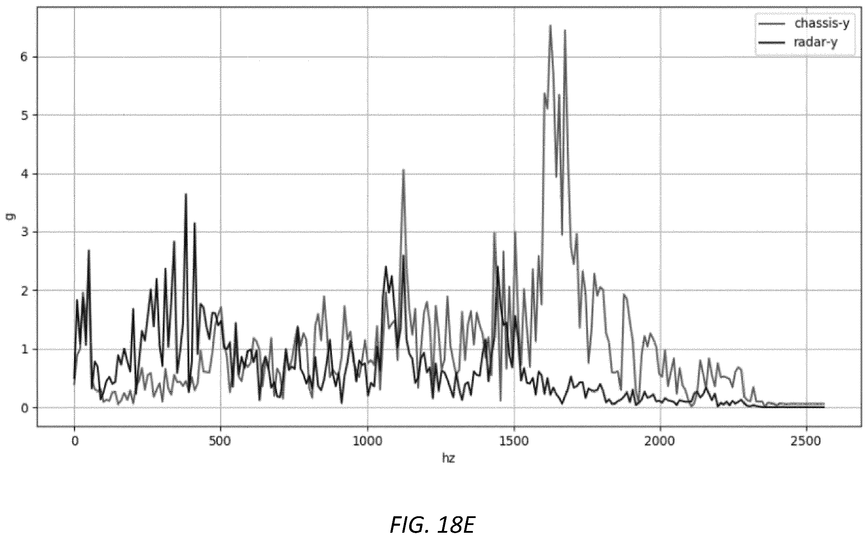

In FIG. 18B, 18E, frequency represents horizontal axis and vibrational force in units of gravity are shown along vertical axes.

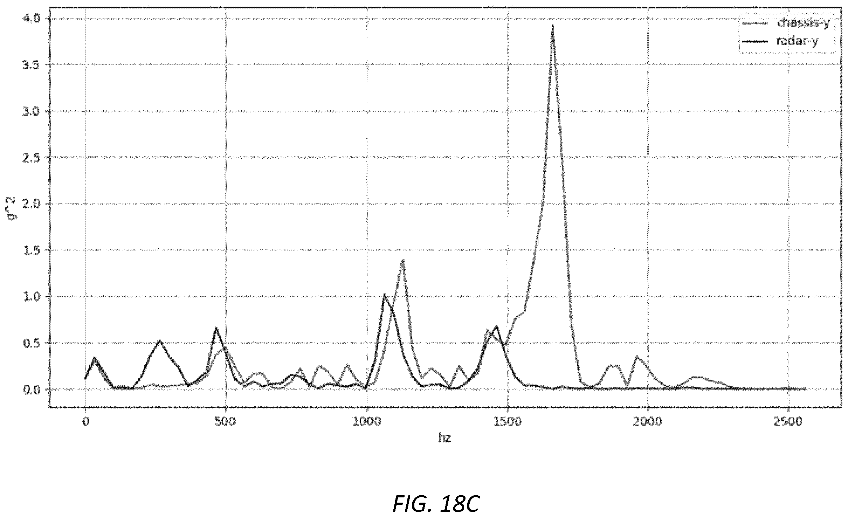

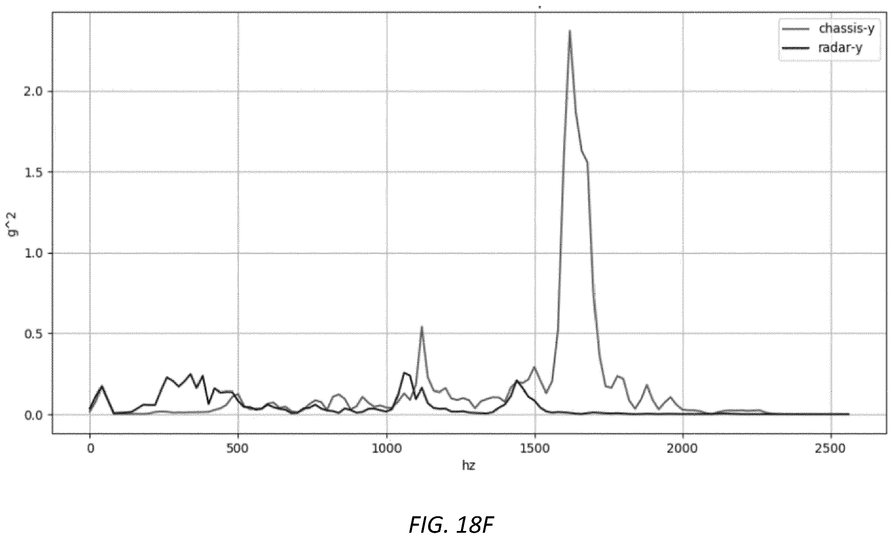

In FIG. 18C, 18F, frequency represents horizontal axis and vibrational force power density in units of gravity-squared are shown along vertical axes.

The speed bumps are able to generate similar vibration profiles as road conditions. However, the shock energy is less than the toughest road conditions (80G max vs. 100G max).

### One Example Embodiment

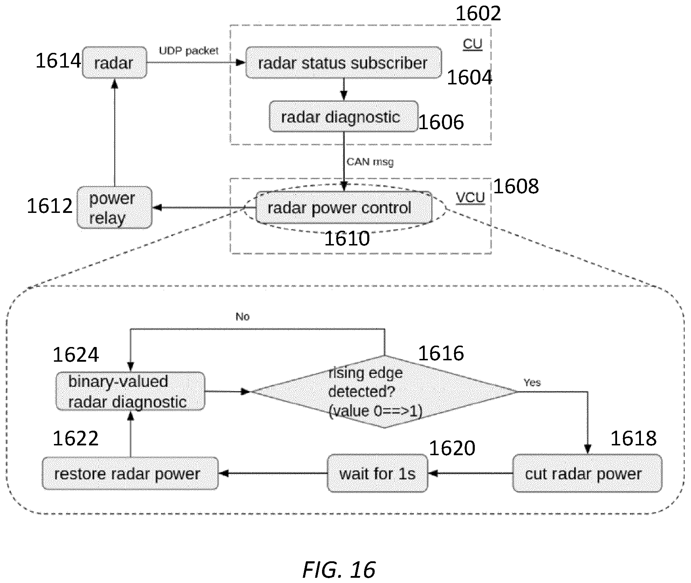

FIG. 16 the system architecture of the online radar power-cycle feature.

On the server 1602 (CU), a processor monitors the ext_disturbed flag, which indicates whether the radar is subjected to potential vibration (1604), from the radar status output and sends a diagnostic message (1606) to the radar power control module on a vehicle controller unit 1608 (VCU) through a controller area network (CAN). Such a diagnostic message may be regarded as a status report, and the VCU may monitor for such status reports.

A radar power control module 1610 in the VCU 1608 may operate as follows. The diagnostic message may be a N-bit binary, where each bit indicates whether the radar with corresponding ID needs power-cycling. For example, on a truck with 6 radars, this field may have N=6. Under nominal circumstances, the diagnostic message reads 000000 (corresponding to radar 0-5 from the right bit to the left bit), indicating no disturbances to the radar units. If a positive ext_disturbed flag is received at the VCU after transmittance from a radar (1616), which indicates a disturbance to that radar unit, the corresponding bit of the diagnostic message is changed to 1, indicating the radar needs to power-cycle (1618). E.g., 100000 means that radar 5 needs to power-cycle. After receiving the power-cycle command, the radar power control on VCU will transmit a reset request to a controller of the radar unit to cut the corresponding radar power, and may optionally specify a time period 1620 or duration (e.g., 1s, a cool down time for the hardware inside the radar) for the radar unit to be off before restoring the power 1622. In other words, the radar unit power is turned off for a time period before being power back on. This may be followed by determining whether the radar unit has power-cycled successfully by performing a binary-valued radar diagnostic 1624 to ensure that radar has powered up correctly. The duration of the time period may be pre-determined, for example between 0.2 and 1.5 seconds (such as 1 second) or may be based on an assessment against a particular threshold. The threshold may be, for example, a temperature threshold relating to the temperature of the radar unit. After being powered off, the temperature of the radar unit decreases and the temperature decrease may be monitored. After the temperature of the radar unit has decreased to or below a pre-determined temperature threshold, the radar unit may be turned back on. As such, the duration in which the radar unit is off may be such as to allow the radar unit temperature to decrease to or below a pre-determined temperature threshold. Alternatively, the duration may be pre-determined based on a known thermal cooling characteristic of the radar unit. By virtue of the above examples, failure in the radar unit is therefore minimized as the radar unit is not powered back on while the radar unit remains too hot to function correctly. The reset request transmitted by the VCU may specify the duration of the time period.

### Verification examples

In one embodiment, the verification was done on a truck. An actual road test was performed using a controlled test route. The main vibrational breaking point was where the truck passes the railroad at 40-45mph. To ensure that radar 5 breaks as expected, the damping system of the truck was removed during the test.

### Data Loss and Pointcloud Integrity

In one test, two radars, referred to as radar 5 and radar 1 were monitored during a trip that follows the above route for 5 laps. Radar 5 was rear mounted and implemented the disclosed technology, while radar 1 was conventionally operating. The cool down time for radar 5 was set to 1s. It was observed that the radar 5 stops publishing data when subjected to the shock from the railroad. After the power-cycle, the pointcloud data output is restored. By contrast, radar 1 that was not equipped with the technology kept publishing (erroneous) pointcloud data while subjected to shock.

Case studies show that for one complete radar diagnostic and power cycle loop, there are about 20-30 frames data loss, i.e., radar 5 publishes an empty point cloud to those frames. Testing showed that after the power is restored, the radar is able to publish data as normal.

### Cool Down Waiting Time / Stability

In one example test, it was seen that the 1s cool down time may not be sufficient, i.e., the radar throws ext_disturbed flag and not publishing data right after its power-cycle. In this case, the software keeps cutting and restoring power throughout the test run and may have defected the radar hardware. In this example test, the radar was still down one day after the test but recovered after 3 days. While increasing the cool down time can improve the stability, it also increases the time duration when the radar has no data. Since the situation is observed once in over 15 power-cycle cases and taking into account that power-cycling isn't triggered frequently, we consider this as low-risk and set the cool down time as 1s.

With the new radar mounting design the radar 5 situation happens less than 1 out of 10 trips. The one-time exception is further backed up by the power-cycle system. Current testing shows over 90% success rate of the power-cycle feature.

Some preferred solutions incorporated into embodiments are listed below.
1. An apparatus, comprising a base plate comprising a top surface and a bottom surface, the base plate comprising one or more through-holes; a bracket having a horizontal portion and a vertical portion that is perpendicular to the horizontal portion wherein the horizontal portion comprises one or more through-holes that align with corresponding one of more through-holes of the base plate; one or more fasteners extending through the one or more through-holes of the horizontal portion and the one or more through-holes of the base plates configured to rigidly couple the base plate with the bracket; and one or more washers having base portions having base portion openings and cylindrical portions surrounding the base portion openings and extending in a vertical direction, wherein cross-sections of the cylindrical portions allow the cylindrical portions to be inserted into the one or more through-holes of the horizontal portion of the bracket and further allow insertion of the one or more fasteners through the cylindrical portions and the one or more openings of the base plate such that the base portions of the one or more washers provide a separation between the bottom surface of the base plate and a top surface of the horizontal portion of the bracket. Example embodiments of the apparatus are depicted with reference to FIGS. 5 to 15D.
2. The apparatus of solution 1, wherein the one or more washers comprise a vibration dampener material that dampens vibrations between the base plate and the bracket along the vertical direction and dampens vibrations between the base plate and the bracket along a plane of the base plate.
3. The apparatus of solution 1 or 2, wherein the cylindrical portions of the one or more washers completely surround the base portion openings.
4. The apparatus of any of above solutions, wherein the vertical portion of the bracket comprises a receptacle mechanism that is configured to securely affix a radar housing to the bracket.
5. The apparatus of solution 4, wherein the receptacle mechanism comprises one or more through holes in the bracket through which one or more fasteners are passed and secure using one or more screws, and wherein a second vibration dampener material is inserted in a first gap between the vertical portion of the bracket and the radar housing and a second gap between the one or more screws and the bracket.
6. The apparatus of any of above solutions, wherein the vertical portion of the bracket comprises a planar plate.
7. The apparatus of any of solutions 1-5, wherein the vertical portion of the bracket comprises multiple strips that are spaced apart from each other.
8. The apparatus of solutions 2-7, wherein the vibration dampener material is configured to attenuate vibrations having a peak frequency between 1.2 KHz and 1.8 KHz and a bandwidth between 300 to 500 Hz.
9. The apparatus of solutions 2-7, wherein the second vibration dampener material comprises a same material as the vibration dampener material.
10. The apparatus of solutions 8-9, wherein the vibration dampener material and the second vibration dampener material are configured to mitigate vibrations having a duration between 20 millisecond and 1 second.
11. A method of controlling operation of a vehicle, comprising: monitoring, by a processor on a vehicle, status reports from one or more radar units disposed on the vehicle; transmitting, upon receiving a status report from a radar unit of the one or more radar unit that the radar unit has experienced a disturbance, a reset request to a controller of the one or more radar units, wherein a power to the radar unit is turned off for a pre-determined time period due to the reset request; and determining, at a time after the pre-determined time period, whether the radar unit has successfully power cycled and is operating as expected. One example implementation is described with reference to FIG. 16.
12. The method of solution 11, wherein the one or more radar units comprise at least 5 radar units.
13. The method of any of solutions 11-12, wherein the status report indicates that the radar unit has experienced a vibrational disturbance.
14. The method of any of solutions 11-13, wherein the processor sends the reset request to the controller over a controller area network interface.
15. The method of any of solutions 11-14, wherein the reset request specifies the pre-determined time period.
16. The method of any of solutions 11-14, wherein the pre-determined time period is pre-configured for the controller based on a thermal cooling characteristic of the radar unit.
17. The method of any of solutions 11-16, wherein the reset request is an N-bit message wherein N is a number of the one or more radar units.
18. The method of any of solutions 11 to 17, wherein the pre-determined time period is between 0.2 to 1.5 seconds.
19. A radar controller system, comprising: one or more radar units disposed on a vehicle, wherein at least one radar unit is affixed to a rear of the vehicle using the apparatus recited in any of solutions 1-10, a processor disposed on the vehicle; and a vehicle controller unit communicatively coupled with the processor, wherein the processor is configured to implement a method recited in any of solutions 11-18. One example implementation is described with reference to FIG. 16 and FIG. 4.
20. A vehicle controller unit, comprising: a controller on a vehicle configured to control power to one or more radar units, the controller being communicatively coupled via a controller area network with a processor on the vehicle, the controller configured to: receive a reset request from the processor; power cycling radar units from the one or more radar units identified in the reset request, wherein the power cycling a particular radar unit comprises turning off power to the particular radar unit for a duration that allowed the particular radar unit to cool down below a threshold prior to being powered on. One example implementation is described with reference to FIG. 16 and FIG. 4.
21. The vehicle controller unit of solution 20, wherein the one or more radar units comprise at least 5 radar units.
22. The vehicle controller unit of solution 20, wherein the reset request is an N-bit message wherein N is a number of the one or more radar units.
23. The vehicle controller unit of solution 20, wherein the pre-determined time period is between 0.2 to 1.5 seconds.
24. A vehicular radar installation apparatus, comprising: a platform that is affixable to a rear of a truck cabin such that the platform, upon installation on the truck, allows secure mounting of a rear-facing radar at an elevation between a lower threshold and an upper threshold, the lower threshold and the upper threshold being selected to enable detection of objects using a radar view underneath a trailer attached to the truck. Some example configurations are described with reference to FIGS. 3A - 3C.
25. The apparatus of solution 24, wherein the lower threshold is 650 mm.
26. The apparatus of solutions 24-25, wherein the upper threshold is 800 mm.
27. The apparatus of any of solutions 24-16, wherein the apparatus corresponds to the apparatus for vehicular radar installation recited in Solutions 1 to 10.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. An apparatus for vehicular radar installation, comprising:
a base plate comprising a top surface and a bottom surface, the base plate comprising one or more through-holes;
a bracket having a horizontal portion and a vertical portion that is perpendicular to the horizontal portion wherein the horizontal portion comprises one or more through-holes that align with corresponding one of more through-holes of the base plate;
one or more fasteners extending through the one or more through-holes of the horizontal portion and the one or more through-holes of the base plates configured to rigidly couple the base plate with the bracket; and
one or more washers having base portions having base portion openings and cylindrical portions surrounding the base portion openings and extending in a vertical direction,
wherein cross-sections of the cylindrical portions allow the cylindrical portions to be inserted into the one or more through-holes of the horizontal portion of the bracket and further allow insertion of the one or more fasteners through the cylindrical portions and the one or more openings of the base plate such that the base portions of the one or more washers provide a separation between the bottom surface of the base plate and a top surface of the horizontal portion of the bracket.

2. The apparatus of claim 1, wherein the one or more washers comprise a vibration dampener material that dampens vibrations between the base plate and the bracket along the vertical direction and dampens vibrations between the base plate and the bracket along a plane of the base plate.

3. The apparatus of claim 2, wherein the base portions of the one or more washers form an upper base portion and a lower base portion of the one or more washers.

4. The apparatus of claim 3, wherein the upper base portion dampens the vibrations between the base plate and the bracket along the vertical direction, and wherein the lower base portion dampens the vibrations between the base plate and the bracket along a plane of the base plate.

5. The apparatus of any of claims 2 to 4, wherein a fastener of the one or more fasteners extends through a through-hole of the one or more through-holes of the horizontal portion, and wherein the vibration dampener material separates the horizontal portion from the fastener.

6. The apparatus of claim 5, wherein the dampener comprises a cylindrical protrusion having a diameter equal to or less than a diameter of the through-hole of the horizontal portion.

7. The apparatus of any preceding claim, wherein the cylindrical portions of the one or more washers completely surround the base portion openings.

8. The apparatus of any preceding claim, wherein the vertical portion of the bracket comprises a receptacle mechanism that is configured to securely affix a radar housing to the bracket.

9. The apparatus of claim 8, wherein the receptacle mechanism comprises one or more through holes in the bracket through which one or more fasteners are passed and secure using one or more screws, and wherein a second vibration dampener material is inserted in a first gap between the vertical portion of the bracket and the radar housing and a second gap between the one or more screws and the bracket.

10. The apparatus of any preceding claim, wherein the vertical portion of the bracket comprises a planar plate.

11. The apparatus of any of claims 1-9, wherein the vertical portion of the bracket comprises multiple strips that are spaced apart from each other.

12. The apparatus of claims 2-6, wherein the vibration dampener material is configured to attenuate vibrations having a peak frequency between 1.2 KHz and 1.8 KHz and a bandwidth between 300 to 500 Hz.

13. The apparatus of claims 9, wherein the second vibration dampener material comprises a same material as the vibration dampener material.

14. The apparatus of claims 12-13, wherein the vibration dampener material and the second vibration dampener material are configured to mitigate vibrations having a duration between 20 millisecond and 1 second.

15. A vehicular radar system comprising:
the apparatus of any preceding claim;
a rear-facing radar mounted to the bracket; and
a platform to which the apparatus is mounted,
wherein the platform is arranged to be fixed to a rear of a truck cabin of a truck such that the platform, upon installation on the truck, allows secure mounting of the rear-facing radar at an elevation between a lower threshold and an upper threshold, the lower threshold and the upper threshold being selected to enable detection of objects using a radar view underneath a trailer attached to the truck.
